# EUROPÄISCHE PATENTSCHRIFT

(11) **EP 1 310 396 B1**
(45) Veröffentlichungstag und Bekanntmachung des Hinweises auf die Patenterteilung: **20.02.2008**
(21) Anmeldenummer: 02024006.5
(22) Anmeldetag: 26.10.2002
(51) Int. Cl.: B60J 7/06, B60J 7/20

(54) **Höhenverstellbarer Verdeckkastenboden an einem Fahrzeug mit Falt- oder Klappverdeck**
Cabrio top storage compartment for convertible vehicle with a high-ajustable bottom
Coffre de stockage pour capote de cabriolet avec sol ajustable en hauteur

(30) Priorität: 10.11.2001 DE 10155308
(43) Veröffentlichungstag der Anmeldung: 14.05.2003
(73) Patentinhaber: Bayerische Motoren Werke Aktiengesellschaft, 80809 München (DE)
(72) Erfinder: Meierhofer, Walter, 80807 München (DE)

(56) Entgegenhaltungen:
- EP-A- 0 933 242
- DE-C- 19 713 606
- US-A- 5 810 413
- US-A- 5 904 395

## Beschreibung

Die Erfindung betrifft einen höhenverstellbaren Verdeckkastenboden an einem Fahrzeug mit Falt- oder Klappverdeck, mit den im Oberbegriff des Patentanspruches 1 angegebenen Merkmalen.

Ein derartiger Verdeckkastenboden ist in der DE 38 29 346 A1 an einem Kraftfahrzeug mit einem zurückklappbaren Verdeck vorgesehen, der in eine Tieflage abgesenkt über dem Verdeckkastenboden einen Aufnahmeraum bildet, in den das geöffnete Verdeck einzubringen ist. Ist bei geschlossenem Verdeck der Verdeckkastenboden in eine Hochlage angehoben, so ist unter dem Verdeckkastenboden ein Aufnahmeraum gebildet, der den dahinter befindlichen Gepäckraum entsprechend vergrößert. An den Randbereichen des Verdeckkastenbodens schließen sich Wände aus einem elastischen, nachgiebigen Material an, die in Höhenrichtung ziehharmonikaartig zusammenschiebbar sind. Die elastischen und nachgiebigen Seitenwände können den Verdeckkastenboden in keiner Höhenlage ausreichend festhalten.

Dokument DE 298 09 008 U1 beschreibt ein Verdeckkastenboden gemäss dem Oberbegriff des Anspruchs 1.

Der Erfindung liegt die Aufgabe zu Grunde, einen höhenverstellbaren Verdeckkastenboden mit den Merkmalen im Oberbegriff des Patentanspruches 1 anzugeben, der mit einfachen Mitteln in einer Hochlage und in einer Tieflage ausreichend festgehalten ist.

Diese Aufgabe ist durch die im Patentanspruch 1 angegebenen Merkmale gelöst. Vorteilhafte Ausgestaltungen der Erfindung sind den Unteransprüchen entnehmbar.

Die mit dem Verdeckkastenboden verbundenen Seitenwände können jeweils durch zwei einfache, ausreichend feste Wandteile beispielsweise aus Kunststoff gebildet sein, die über eine gemeinsame Scharnierachse schwenkbar verbunden sind. Um einen größeren Schwenkwinkel der beiden schwenkbar verbundenen Wandteile von beispielsweise etwa 180° zu ermöglichen, kann die Scharnierachse seitlich neben der Hauptebene der Wandteile ausgebildet sein. Die beiden scharnierartig miteinander verbundenen Wandteile sind jeweils an einem von der Scharnierachse abgewandten Randbereich einerseits mit dem Verdeckkastenboden und andererseits mit der Fahrzeugkarosserie jeweils schwenkbar verbunden. Der Verdeckkastenboden ist in der Hochlage und in der Tieflage in einfacher Weise beispielsweise dadurch festgehalten, dass in der Hochlage und in der Tieflage ein betreffendes Wandteil der beiden scharnierartig verbunden Wandteile an einem zugeordneten Anschlag anliegt und ein Federelement, beispielsweise eine einfache Übertotpunktfeder das betreffenden Wandteil gegen den Anschlag belastet. Die Übertotpunktfeder kann derart an einem Wandteil angelenkt sein, dass sie den Verdeckkastenboden über einer vorgegebenen Höhenlage in die Hochlage und unter der vorgegebenen Höhenlage in die Tieflage belastet.

Ein Ausführungsbeispiel der Erfindung wird an Hand einer Zeichnung näher erläutert. Es zeigen
- Figur 1: einen Seitenbereich des in die Hochlage angehobenen Verdeckkastenbodens und
- Figur 2: eine Figur 1 entsprechende Ansicht von dem an die Tieflage angenäherten Verdeckkastenboden.

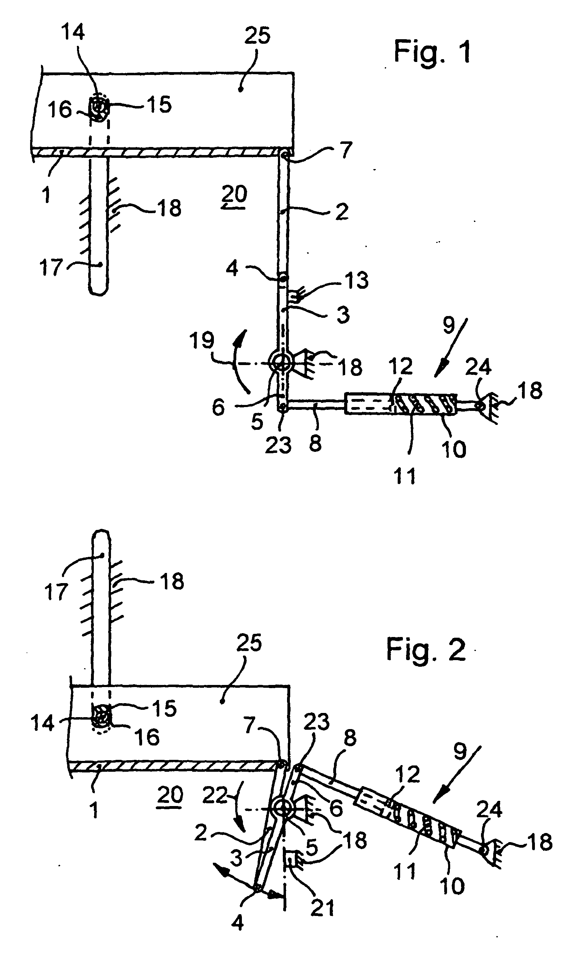

Der in Figur 1 mit einem Seitenbereich vereinfacht dargestellte Verdeckkastenboden 1 ist an den beiden seitlich gegenüberliegenden Bereichen jeweils über zwei Wandteile 2, 3 höhenverstellbar, die in einer gemeinsamen Scharnierachse 4 schwenkbar miteinander verbunden sind. Das in der dargestellten Hochlage des Verdeckkastenbodens 1 untere Wandteil 3 ist um eine fahrzeugfeste Stützachse 5 schwenkbar an der Fahrzeugkarosserie 18 befestigt und weist einen Hebelarm 5 auf, der entgegengesetzt zum Hauptbereich des Wandteiles 3 radial zur Stützachse 5 verläuft. Das obere Wandteil 3 ist um eine Verbindungsachse 7 schwenkbar mit dem Verdeckkastenboden 1 verbunden. In der dargestellten Hochlage des Verdeckkastenbodens 1 befinden sich die beiden Wandteile 2, 3 sowie der Hebelarm 6 in einer etwa vertikalen Ebene. Die Scharnierachse 4, die Stützachse 5 sowie die Verbindungsachse 7 verlaufen parallel in Fahrzeuglängsrichtung. An dem freien Ende des Hebelarmes 6 des Wandteiles 3 greift die Kolbenstange 8 eines Federzylinders 9 an, wobei die Kolbenstange 8 um eine zur Stützachse 5 parallele Schwenkachse 23 schwenkbar mit dem Hebelarm 6 verbunden ist. Der Zylinder 10 ist an der Fahrzeugkarosserie 18 um eine zur Schwenkachse 23 parallele Achse 24 schwenkbar befestigt. In dem Zylinder 10 des Federzylinders 9 ist eine Druckfeder 11 axial vorgespannt, die einen mit der Kolbenstange 8 verbundenen Kolben 12 axial nach außen belastet. In der dargestellten Hochlage liegt das Wandteil 3 unter der Kraft der Druckfeder 11 an einem karosseriefesten Anschlag 13 an. Etwa von einem seitlich mittleren Bereich des Verdeckkastenbodens 1 steht in Fahrtrichtung nach vorne ein Bolzen 14 ab, der in eine Aufnahmeöffnung 15 in einem Gleitstein 16 eingreift, der in einer an der Fahrzeugkarosserie ausgebildeten Vertikalführung 17 höhenverstellbar geführt ist und den Verdeckkastenboden 1 seitlich fixiert. In der dargestellten Hochlage des Verdeckkastenbodens 1 befindet sich die Längsachse des Federzylinders 9 in einer etwa horizontalen Lage in Fahrzeugquerrichtung.

Die Druckfeder 11 bewirkt an dem unteren Wandteil 3 ein Drehmoment 19 im Uhrzeigersinn um die Stützachse 5, das auch im Fahrbetrieb des Fahrzeugs ein stabiles Anliegen des Wandteiles 3 an dem Anschlag 13 bewirkt, wodurch der Verdeckkastenboden 1 in der Hochlage stabil festgehalten ist. In der Hochlage des Verdeckkastenbodens 1 ist das Falt- oder Klappverdeck geschlossen. Unter dem Verdeckkastenboden 1 ein Stauraum 20 gebildet, der den dahinter angeordneten Gepäckraum entsprechend vergrößert, so dass weitere oder größere Gegenstände in den Gepäckraum einzubringen sind. An dem unteren Wandteil 3 ist ein nicht dargestellter Griff befestigt, über den an dem Wandteil 3 ein Drehmoment im Gegenuhrzeigersinn um die Stützachse 5 bewirkt werden kann, das die beiden Wandteile 2, 3 entgegengesetzt verschwenkt und dabei die Druckfeder 10 im Federzylinder 9 weiter komprimiert, bis die Längsachse des Federzylinders 9 durch die Stützachse 5 verläuft. Wenn die Längsachse des Federzylinders 9 durch die Stützachse 5 verläuft, hat der Verdeckkastenboden 1 eine vorgegebene Höhenlage erreicht. Befindet sich der Verdeckkastenboden 1 über dieser Höhenlage, so belastet die Druckfeder 11 den Verdeckkastenboden 1 in die Hochlage. Unterschreitet dagegen der Verdeckkastenboden 1 die vorgegebene Höhenlage, belastet die Schraubenfeder 11 den Verdeckkastenboden 1 in eine Tieflage. Die Schraubenfeder 11 wirkt demnach als Übertotpunktfeder, wobei ihr Totpunkt erreicht ist, wenn die Druckkraft der Schraubenfeder 11 durch die Stützachse 5 verläuft.

In Figur 2 ist der Verdeckkastenboden 1 an seine tiefgestellte Tieflage angenähert dargestellt, in der das Wandteil 3 unter der Druckkraft der Schraubenfeder 11 stabil an einem karosseriefesten Anschlag 21 anliegt. Auf der anderen, nicht dargestellten Fahrzeugseite sind ebenfalls zwei Wandteile vorgesehen, die über eine gemeinsame Scharnierachse miteinander bzw. über eine Stützachse mit der Fahrzeugkarosserie bzw. eine Verbindungsachse mit dem Verdeckkastenboden jeweils schwenkbar verbunden sind.

Ein Tief- oder Hochstellen des Verdeckkastenbodens 1 kann durch gleichzeitiges Verschwenken der im vorliegenden Fall an den jeweils unteren Wandteilen 3 befestigten Griffe erfolgen, wobei in diesem Fall der Verdeckkastenboden 1 etwa parallel nach unten bzw. oben verstellt wird. Ebenso kann ein Tief- oder Hochstellen des Verdeckkastenbodens 1 in die Tieflage bzw. Hochlage in zwei Schritten erfolgen, wobei zunächst auf einer Seite das betreffende untere Wandteil 3 über den damit verbundenen Griff verschwenkt wird und danach das auf der anderen Fahrzeugseite befindliche Wandteil entsprechend geschwenkt wird. Der Verdeckkastenboden 1 führt dabei zwei Schwenkbewegungen um die Achse des Bolzens 14 aus, der den Verdeckkastenboden 1 im Bereich der Vertikalführung 17 seitlich stützt. Zwischen dem vorderen Randbereich des Verdeckkastenbodens 1 und einem hinteren Bereich eines Verdeckstoffes des Falt- oder Klappverdecks ist eine Abdeckung 25 beispielsweise aus einem Stoff vorgesehen, der an den Verdeckstoff angenäht sein kann und beispielsweise über eine Klipsleiste mit dem Verdeckkastenboden zu verklipsen ist. Weitere Abdeckungen beispielsweise aus einem Stoff können zwischen weiteren Randbereichen und angrenzenden Wänden der Fahrzeugkarosserie oder des Falt- bzw. Klappverdecks vorgesehen sein. Die Abdeckungen verhindern ein Verschmutzen von im Gepäckraum befindlichen Gegenständen und verhindern oder erschweren einen Übertritt von Geräuschen in den Fahrgastraum. Der Verdeckkastenboden bildet eine stabile Ablagefläche, auf der ein manuell oder motorisch verstellbares Falt- oder Klappverdeck abzulegen ist.

Bei dem Ausführungsbeispiel sind die Seitenwände seitlich unter dem Verdeckkastenboden angeordnet. Ebenso können die Seitenwände auch über dem Verdeckkastenboden angeordnet sein. Der Hebelarm, an dem ein Federelement angreift, kann an einer beliebigen Stelle mit dem unteren oder oberen Wandteil verbunden sein und in eine beliebige, eventuell von der Hauptebene des betreffenden Wandteiles abweichende Richtung verlaufen. Die Vertikalführung bzw. der in die Vertikalführung oder in eine Aufnahmeöffnung in einem Gleitstein in der Vertikalführung eingreifende Bolzen kann auch entfallen. Das Federelement kann von einer beliebigen Feder, beispielsweise einer Gasdruckfeder gebildet sein, die in einer beliebigen Richtung verlaufen und den Verdeckkastenboden lediglich in die Hochlage oder lediglich in die Tieflage belasten kann. Es ist auch ein Entfall des Federelements möglich. Zur Arretierung des Verdeckkastenbodens in der Hochlage bzw. der Tieflage kann auch eine Verriegelungseinrichtung vorgesehen sein, die in der jeweiligen Hochlage bzw. Tieflage ein Wandteil bzw. ein damit in Verbindung stehendes Bauteil lösbar arretiert. Die Hochlage und/oder Tieflage kann auch von einem Anschlag begrenzt sein, der mit einem Bereich des Verdeckkastenbodens zusammenwirkt.

## Patentansprüche

1. Höhenverstellbarer Verdeckkastenboden an einem Fahrzeug mit Falt- oder Klappverdeck, der über faltbare Seitenwände mit der Fahrzeugkarosserie verbunden ist, wobei zwei an gegenüber liegenden Seitenbereichen des Verdeckkastenbodens (1) angeordnete Seitenwände durch jeweils zwei um eine Scharnierachse (4) schwenkbar verbundene Wandteile (2, 3) gebildet sind, von denen ein Wandteil (2) um eine Verbindungsachse (7) am Verdeckkastenboden (1) und das andere Wandteil (3) um eine Stützachse (5) an der Fahrzeugkarosserie (18) jeweils schwenkbar angelenkt sind, **dadurch gekennzeichnet, dass** der Verdeckkastenboden (1) in einem in Fahrzeugquerrichtung mittleren Bereich in Höhenrichtung verstellbar an der Fahrzeugkarosserie (18) geführt ist.

2. Verdeckkastenboden nach Anspruch 1, **dadurch gekennzeichnet, dass** eine Übertotpunktfeder (9) den über eine vorgegebene Höhenlage angehobenen Verdeckkastenboden (1) in eine Hochlage und den unter die vorgegebene Höhenlage abgesenkten Verdeckkastenboden (1) in eine Tieflage belastet, und in der Hochlage sowie in der Tieflage der Verdeckkastenboden (1) oder ein Wandteil (3) unter der Kraft der Übertotpunktfeder (9) an einem zugeordneten Anschlag (13, 18) anliegt.

3. Verdeckkastenboden nach Anspruch 1 oder 2, **dadurch gekennzeichnet, dass** das an der Fahrzeugkarosserie (18) schwenkbar befestigte Wandteil (3) einen Hebelarm (6) aufweist, an dem die Übertotpunktfeder (9) angreift.

4. Verdeckkastenboden nach Anspruch 3, **dadurch gekennzeichnet, dass** der Hebelarm (6) des Wandteiles (3) in einem vorgegebenen Winkel zur Hauptebene des Wandteiles (3) etwa radial zur Stützachse (5) verläuft.

5. Verdeckkastenboden nach Anspruch 3 oder 4, **dadurch gekennzeichnet, dass** sich das an der Fahrzeugkarosserie (18) schwenkbar befestigte Wandteil (3) und der Hebelarm (6) in entgegengesetzten Richtungen etwa radial von der Stützachse (5) weg erstrecken.

6. Verdeckkastenboden nach einem der Ansprüche 1 bis 5, **dadurch gekennzeichnet, dass** die beiden Wandteile (2, 3) unterhalb oder oberhalb des Verdeckkastenbodens (1) angeordnet sind.

7. Verdeckkastenboden nach einem der Ansprüche 1 bis 6, **dadurch gekennzeichnet, dass** sich der Hebelarm (6) von der Stützachse (5) in der Hochlage des Verdeckkastenbodens (1) nach oben und in der Tieflage des Verdeckkastenbodens (1) nach unten erstreckt.

8. Verdeckkastenboden nach einem der Ansprüche 2 bis 7, **dadurch gekennzeichnet, dass** die Übertotpunktfeder (9) eine in einem Zylinder (10) angeordnete Druckfeder (11) ist, die eine axial verstellbare Kolbenstange (8) nach außen belastet, die an dem Hebelarm (6) des Wandteiles (3) schwenkbar angelenkt ist, und der Zylinder (10) an der Fahrzeugkarosserie (18) schwenkbar befestigt ist.

9. Verdeckkastenboden nach Anspruch 8, **dadurch gekennzeichnet, dass** von dem Verdeckkastenboden (1) ein Bolzen (14) in Fahrzeuglängsrichtung absteht, der in eine karosserieseitig ausgebildete Vertikalführung oder in eine Aufnahmeöffnung (15) eines in der Vertikalführung (17) höhenverstellbaren Gleitsteines (16) eingreift.

10. Verdeckkasten nach einem der Ansprüche 1 bis 9, **dadurch gekennzeichnet, dass** mit dem an der Fahrzeugkarosserie (18) schwenkbar verbundenen Wandteil (3) ein vom Gepäckraum des Fahrzeugs zugänglicher Griff verbunden ist, über den an diesem Wandteil (3) ein Drehmoment (19, 22) um die Stützachse (5) zu bewirken ist.

## Claims

1. A height-adjustable convertible top compartment base on a vehicle with a folding or convertible top, which is connected by foldable side walls to the vehicle body, wherein two side walls arranged on opposing side regions of the convertible top compartment base (1) are formed in each case by two wall parts (2, 3), which are connected so as to pivot about a hinge pin (4), of which one wall part (2) is pivotably articulated about a connecting pin (7) on the convertible top compartment base (1) and the other wall part (3) is pivotably articulated about a support pin (5) on the vehicle body (18), **characterised in that** the convertible top compartment base (1) is guided on the vehicle body (18) so as to be adjustable in the height direction in a central region in the transverse direction of the vehicle.

2. A convertible top compartment base according to claim 1, **characterised in that** an over centre spring (9) loads the convertible top compartment base (1) raised above a predetermined height position into a high position and loads the convertible top compartment base (1) lowered below the predetermined height position into a low position and in the high position and in the low position, the convertible top compartment base (1) or a wall part (3) rests under the force of the over centre spring (9) against an associated stop (13, 18).

3. A convertible top compartment base according to claim 1 or 2, **characterised in that** the wall part (3) pivotably fastened to the vehicle body (18) has a lever arm (6), on which the over centre spring (9) engages.

4. A convertible top compartment base according to claim 3, **characterised in that** the lever arm (6) of the wall part (3) extends at a predetermined angle with respect to the main plane of the wall part (3) approximately radially to the support pin (5).

5. A convertible top compartment base according to claim 3 or 4, **characterised in that** the wall part (3) pivotably fastened to the vehicle body (18) and the lever arm (6) extend in opposite directions approximately radially away from the support pin (5).

6. A convertible top compartment base according to any one of claims 1 to 5, **characterised in that** the two wall parts (2, 3) are arranged below or above the convertible top compartment base (1).

7. A convertible top compartment base according to any one of claims 1 to 6, **characterised in that** the lever arm (6) extends upwardly from the support pin (5) in the high position of the convertible top compartment base (1) and downwardly in the low position of the convertible top compartment base (1).

8. A convertible top compartment base according to any one of claims 2 to 7, **characterised in that** the over centre spring (9) is a compression spring (11) arranged in a cylinder (10), which outwardly loads an axially adjustable piston rod (8), which is pivotably articulated to the lever arm (6) of the wall part (3), and the cylinder (10) is pivotably fastened to the vehicle body (18).

9. A convertible top compartment base according to claim 8, **characterised in that** a bolt (14) projects from the convertible top compartment base (1) in the longitudinal direction of the vehicle, which bolt engages in a vertical guide configured on the body side or in a receiving opening (15) of a sliding block (16) which is height adjustable in the vertical guide (17).

10. A convertible top compartment according to any one of claims 1 to 9, **characterised in that** a handle, which is accessible from the luggage space of the vehicle, via which handle a torque (19, 22) about the support pin (5) is to be brought about on this wall part (3), is connected to the wall part (3) which is pivotably connected to the vehicle body (18).

## Revendications

1. Fond de logement à toit escamotable, réglable en hauteur, d'un véhicule équipé d'un toit pliant ou repliable, relié par des parois latérales pliantes à la carrosserie du véhicule, dans lequel :
deux parois latérales prévues sur des zones latérales opposées du fond (1) du logement de toit escamotable sont formées chacune par deux parties de paroi (2, 3) reliées de manière pivotante par un axe de charnière (4), et dont une partie de paroi (2) est articulée de manière pivotante autour d'un axe de liaison (7) au fond (1) du logement à toit escamotable et l'autre partie de paroi (3) est articulée de manière pivotante autour d'un axe d'appui (5) à la carrosserie (18) du véhicule,
**caractérisé en ce que**
le fond (1) du logement à toit escamotable est guidé de manière réglable à la carrosserie (18) du véhicule, dans le sens de la hauteur, dans une zone médiane dans la direction transversale du véhicule.

2. Fond de logement à toit escamotable selon la revendication 1,
**caractérisé par**
un ressort à point mort (9) qui sollicite un fond de logement de toit escamotable relevé dans une position haute au-dessus de la position en hauteur prédéfinie et du fond (1) abaissé dans une position basse en dessous de la position prédéfinie et dans la position haute ainsi que dans la position basse, le fond (1) du logement à toit escamotable ou une partie de paroi (3) sont appliqués contre une butée (13, 18) correspondante sous la force du ressort à point mort (9).

3. Fond de logement à toit escamotable selon l'une quelconque des revendications 1 ou 2,
**caractérisé en ce que**
la partie de paroi (3) fixée de manière pivotante à la carrosserie (18) du véhicule présente un bras de levier (6) sur lequel agit un ressort à point mort (9).

4. Fond de logement à toit escamotable selon la revendication 3,
**caractérisé en ce que**
le bras de levier (6) de la partie de paroi (3) est dirigé suivant un angle prédéfini par rapport au plan principal de la partie de paroi (3), sensiblement radialement par rapport à l'axe d'appui (5).

5. Fond de logement à toit escamotable selon l'une quelconque des revendications 3 ou 4,
**caractérisé en ce que**
la partie de paroi (3) fixée de manière pivotante à la carrosserie (18) du véhicule et le bras de levier (6) s'écartent radialement de l'axe d'appui (5) dans des directions opposées.

6. Fond de logement à toit escamotable selon l'une quelconque des revendications 1 à 5,
**caractérisé en ce que**
les deux parties de paroi (2, 3) se trouvent en dessous ou au-dessus du fond (1) du logement à toit escamotable.

7. Fond de logement à toit escamotable selon l'une quelconque des revendications 1 à 6,
**caractérisé en ce que**
le bras de levier (6) s'étend vers le haut dans la position haute du fond (1) du logement à toit escamotable et pousse vers le bas pour la position basse du fond (1) du logement à toit escamotable.

8. Fond de logement à toit escamotable selon l'une quelconque des revendications 2 à 7,
**caractérisé en ce que**
le ressort à point mort (9) est un ressort de compression (11) installé dans un cylindre (10), sollicité vers l'extérieur par une tige de piston (8) à réglage axial, cette tige étant articulée d'une manière pivotante sur le bras de levier (6) de la partie de paroi (3) et le cylindre (10) est fixé de manière pivotante à la carrosserie (18) du véhicule.

9. Fond de logement à toit escamotable selon la revendication 8,
**caractérisé en ce qu'**
un goujon (14) est en saillie du fond (1) du logement à toit escamotable dans la direction longitudinale du véhicule et ce longeron pénètre dans un guide vertical réalisé du côté de la carrosserie ou dans le logement (15) d'un coulisseau (16) réglable en hauteur dans le guide vertical (17).

10. Fond de logement à toit escamotable selon l'une quelconque des revendications 1 à 9,
**caractérisé en ce que**
la partie de paroi (3) reliée de manière pivotante à la carrosserie (18) du véhicule est reliée à une poignée accessible à partir du coffre à bagages du véhicule et par laquelle on peut exercer un couple (19, 22) autour de l'axe d'appui (5) sur la partie de paroi (3).
